Europäisches Patentamt

European Patent Office

Office européen des brevets

(19)

(11) Veröffentlichungsnummer: **0 348 600 B1**

## (12) EUROPÄISCHE PATENTSCHRIFT

(45) Veröffentlichungstag der Patentschrift: **11.11.92**

(21) Anmeldenummer: **89104538.7**

(22) Anmeldetag: **14.03.89**

(51) Int. Cl.⁵: **C09K 3/10**

(54) Dichtungs- und Versiegelungsmassen und Verfahren zu ihrer Herstellung.

(30) Priorität: **30.06.88 DE 3822122**

(43) Veröffentlichungstag der Anmeldung:
**03.01.90 Patentblatt 90/01**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**EP-A- 0 056 066**
**EP-A- 0 194 361**
**DE-A- 3 700 134**
**FR-A- 2 348 247**

(73) Patentinhaber: **RÜTGERSWERKE AKTIENGE-
SELLSCHAFT**
**Mainzer Landstrasse 217**
**W-6000 Frankfurt am Main 1(DE)**

(72) Erfinder: **Bergmann, Josef, Dr.**
**Südring 63**
**W-6941 Laudenbach(DE)**
Erfinder: **Hockenberger, Lothar, Dr.**

**W-6700 Ludwigshafen/Rhein(DE)**
Erfinder: **Paehler, Ralf**
**Kropsburgring 48**
**W-6701 Dannstadt-Schauernheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine neue Dichtungs- und Versiegelungsmasse auf Basis von flüssigen, merkaptoendständigen Polymeren und Oligomeren, die aufgrund ihrer hervorragenden Alterungs- und Witterungsbeständigkeit vielfache Anwendung in derartigen Massen finden. Eine wichtige Verwendung dieser Massen ist bei der Herstellung von Isolierglas gegeben, wobei die Massen auf Basis merkaptoendständiger Polymere oder Oligomere die Funktion der Verklebung und Versiegelung der Glasplatten miteinander übernehmen.

Gefordert ist demnach in diesem Bereich eine dauerhafte, gute Haftung der Massen auf Glas. Dies ist bei der normalen Isolierglasanwendung gegeben, bei der die Isolierglaseinheit in den Fensterrahmen eingebaut wird und der Verklebungsbereich abgedeckt ist.

Bei der von vielen Architekten derzeit gerne eingesetzten Strukturverglasung, sowie in Wintergärten oder Pflanzhäusern erfolgt eine rahmenlose Verglasung. Dies hat zur Folge, daß die volle Sonneneinstrahlung ungehindert auf den Verklebungsbereich der Isolierglaseinheit auftrifft. Hier zeigen sich mitunter Schäden, die dadurch bedingt sind, daß die Haftung herkömmlicher Massen auf der Basis von merkaptoendständigen Polymeren oder Oligomeren auf Glas bei intensiver Strahlungseinwirkung abgebaut werden kann.

Es ist daher Aufgabe der Erfindung, lagerstabile Dichtungs- und Versiegelungsmassen auf der Basis von flüssigen, merkaptoendständigen Polymeren und/oder Oligomeren bereitzustellen, die eine gute Haftung auf Glas haben und deren Haftung auch durch intensive UV-Strahlung auf die Haftfläche nicht vermindert wird.

Die Lösung der Aufgabe erfolgt durch Dichtungs- und Versiegelungsmassen gemäß der Ansprüche 1-5 und ein Verfahren zu ihrer Herstellung gemäß Anspruch 6.

Aus DE-A 37 00 134 sind Mischungen aus merkaptoendständigen Polysulfidpolymeren, Ruß und reaktiven Silanen bekannt, die direkt nach ihrer Herstellung mit einer Härtermischung auf Basis Mangandioxid gemischt und zu Kunststoffbahnen mit ausgezeichneten Eigenschaften verarbeitet werden. Diese Mischungen sind als Dichtungs- und Versiegelungsmassen leider nicht geeignet, denn bereits die Grundmischung ohne Härter reagiert in sich und härtet innerhalb von 2 bis 4 Wochen aus. Untersuchungen der noch nicht aus- aber bereits angehärteten Grundmischung zeigen, daß die ursprünglich vorhandene gute Haftung der Masse auf Glas nach wenigen Tagen nicht mehr vorhanden ist.

Es wurde gefunden, daß dieses unerwünschte Reaktionsverhalten der Grundmischung unterbunden wird, wenn der Mischung aus merkaptoendständigem Polymer und/oder Oligomer, Ruß und reaktivem Silan zusätzlich Molekularsiebpulver und Bariumoxid zugegeben werden. Durch diese beiden zusätzlichen Komponenten bleibt die Mischung überraschenderweise lagerstabil. Auch bei 3-monatiger Lagerung unter Luftabschluß bei 40 °C erfolgt kein merkliches Ansteigen der Viskosität der Mischung. Sie kann danach, wie am Tage ihrer Herstellung, mit einem Härter vermischt und ausgehärtet werden und zeigt eine ausgezeichnete Haftung auf Glas. Diese Haftung auf Glas wird weder durch Sonnen - noch durch intensive UV-Bestrahlung vermindert.

Die so hergestellten Massen eignen sich ausgezeichnet zur Lösung der Aufgabe der Erfindung.

Für die erfindungsgemäßen Dichtungs- und Versiegelungsmassen sind alle flüssigen Polymere oder Oligomere oder Mischungen von oligomeren und polymeren Verbindungen mit endständigen Merkaptogruppen verwendbar, wie z. B. Polysulfidpolymere, polymere Thioäther u. dgl.

Die bevorzugten flüssigen merkaptoendständigen Verbindungen sind Polysulfid-Polymere und -Oligomere der allgemeinen Formel HS-$(RSS)_n$-RSH, wobei n im Bereich von 5 bis 25 liegt und R einen Alkyl-, Alkyläther oder Alkylthioätherrest darstellt. Der bevorzugte Rest R ist ein Bis-ethyl-formal-Rest der Formel

$-C_2H_4-O-CH_2-O-C_2H_4-$.

Das Molekulargewicht dieser Verbindungen liegt, abhängig von der Zahl n und der Größe des Restes R im Bereich von 500 bis 8000 insbesondere von 2500-4000. Diese Polysulfid-Verbindungen haben bei Raumtemperatur eine Viskosität von 0,5 bis 80 Pa•s. Sie haben eine mittlere Vernetzung von 0,1-2 %

Als Ruß läßt sich im Prinzip jeder handelsübliche Ruß einsetzen, wobei jeweils, wie dem Kautschukfachmann geläufig, die Eigenschaften und Mengen des eingesetzten Rußes die Festigkeit und Elastizität der gehärteten Masse bestimmen. Bevorzugt werden verstärkende oder halbverstärkende Flamm- oder Thermalruße, die in Mengen von 30-80 Gew.-% bezogen auf das merkaptoendständige Polymer und/oder Oligomer eingesetzt werden.

Molekularsiebe sind natürliche oder künstliche Zeolithe unterschiedlicher Porengröße, die erfindungsgemäß als trockene Pulver eingesetzt werden. Bevorzugt eingesetzt werden die Typen 3A und 4A, die als handelsübliche Trockenmittel gebräuchlich sind, in einer Menge von 0,5-3 Gew.-%, bezogen auf das merkaptoendständige Polymer und/oder Oligomer.

Bariumoxid, das in einer Menge von 3-8 Gew.-%, bezogen auf das merkaptoendständige Polymer und/oder Oligomer, eingesetzt wird, kann als fein gemahlenes Pulver der Mischung zugegeben werden. Aus Gründen der besseren Handhabbarkeit ist es jedoch günstiger, eine im Handel erhältliche Paste von Bariumoxid (etwa 60-80 % Bao) in einem mit dem Polymer und/oder Oligomer verträglichen Weichmacher zu verwenden.

Reaktive Silane, die in einer Menge von 1-5 Gew.-%, bezogen auf das Polymer und/oder Oligomer, eingesetzt werden, sind bevorzugt merkapto- oder epoxyendständige Silane. Insbesondere bewährt haben sich Mischungen aus merkapto- und epoxyendständigen Silanen im Verhältnis 2:1 bis 1:2, wobei es der Anteil an merkaptoendständigem Silan gestattet, den Elastizitätsmodul der gehärteten Masse zu variieren.

Die Herstellung der Grundmischung erfolgt in der Art, daß das merkaptoendständige Polymer und/oder Oligomer mit Ruß und wasserfreiem Molekularsiebpulver und evtl. 10-30 % eines Weichmachers gemischt wird. Dieses Mischen erfolgt bevorzugt unter Luftabschluß in einem für derartige Arbeitsgänge gebräuchlichen Mischgerät wie einem Kneter, Planetenmischer, Dissolver oder Turbulentschnellmischer. Die Mischzeit beträgt je nach eingesetztem Gerät 5-20 min. In dieser Zeit ist die angesetzte Mischung durch das Molekularsieb im wesentlichen getrocknet. Zu dieser Mischung werden Bariumoxid und das reaktive Silan zugegeben und erneut gemischt, bis die Grundmischung eine homogene Paste ist.

Diese Mischung ist auch bei höherer Lagertemperatur mehrere Monate lagerstabil, wenn sie unter Luft- und Feuchtigkeitsabschluß gelagert wird. Sie wird bei Gebrauch in an sich bekannter Weise mit der zur Härtung notwendigen Menge einer Härtermischung auf Basis Mangandioxid vermischt. Die so hergestellte Dichtungs- und Versiegelungsmasse härtet dann bei Raumtemperatur je nach Einstellung der Härtermischung innerhalb von 3-24 h zu einer gummielastischen Masse aus. Wird die erfindungsgemäße Dichtungs- und Versiegelungsmasse innerhalb ihrer Verarbeitungszeit auf Glas aufgebracht und dort zum Härten belassen, so bildet sich eine gute Haftung der gehärteten Masse auf Glas aus. Diese Haftung bleibt auch bei intensiver Sonnen- oder UV-Bestrahlung der Haftfläche bestehen, auch wenn die Haftfläche zudem noch in Wasser lagert.

Die eingesetzten Härtermischungen sind ebenfalls pastöse Massen, die durch Vermischen von Mangan(IV)-oxid mit einem mit dem merkaptoendständigen Oligomer und/oder Polymer verträglichen Weichmacher, etwa einer Chlorparaffin, hydriertem Terphenyl oder einem Phthalatweichmacher, und eventuellen Verzögerungs- oder Beschleunigungsmitteln (Molekularsieb, Stearinsäure o. ä.) hergestellt werden. Das Gewichtsverhältnis von Mangan(IV)-oxid zum Weichmacher liegt im Bereich von 50 bis 70 zu 30 bis 50.

Überraschenderweise zeigte sich, daß selbst diese kleinen Weichmachermengen einen überraschenden Einfluß auf die Verformungsbeständigkeit der gehärteten Masse haben.

So haben z. B. Verbrauchsmassen gemäß der des folgenden Beispiels bei verschiedenen Weichmachern in der Härtermischung folgenden Druckverformungsrest (compression set):

| | Druckverformungsrest (%) bei | | |
| --- | --- | --- | --- |
| | 23 °C | 50 °C | 70 °C |
| Benzylbutylphthalat | 9 | 14 | 43 |
| Benzyltexanolphthalat | 16 | 46 | 81 |
| Chlorparafin mit | | | |
| 61 % Chloranteil | 34 | 67 | 75 |
| 64 % Chloranteil | 17 | 35 | 53 |
| 71 % Chloranteil | 6 | 15 | 38 |
| Hydriertes Terphenyl | 60 | 86 | 100 |

Die gleiche Aussage gilt auch für Weichmacherzusätze in der Grundmischung.

Da der Druckverformungsrest ein indirektes Maß für die Dauerbeständigkeit der Masse bei Scherbeanspruchung, daß heißt für den sogenannten "kalten Fluß" ist, kann man je nach gewünschtem Einsatzgebiet der Masse die Dauerbeanspruchung gegen Scherbeanspruchung durch die Wahl des Weichmachers in der Grund- oder Härtermischung gezielt einstellen.

Als Mangan(IV)-oxid werden bevorzugt solche Typen eingesetzt, die als Härter für Polysulfidpolymere im Handel sind. Es handelt sich dabei meist um gamma- oder delta-Mangan(IV)-oxid, das zudem, je nach Hersteller, durch Dosierung mit Fremdionen weiter aktiviert wurde. Dieses Mangan(IV)-oxid kann bis zu 10 Gew.-% Wasser enthalten. Dieses Wasser ist bei den erfindungsgemäß eingesetzten Härtermischungen besonders erwünscht, da die Grundmischung trocken ist, zur schnellen Härtung der Masse aber ein gewisser Feuchtigkeitsgehalt notwendig ist.

**Beispiel**

5000 g eines Polysulfid-Polymers der durchschnittlichen Struktur

$HS-(C_2H_4-O-CH_2-O-C_2H_4-SS)_{23}-C_2H_4-O-CH_2-O-C_2H_4-SH$

mit etwa 2 % Quervernetzung, einem mittleren Molekulargewicht von 4000 und einer Viskosität bei 27 °C von 35 bis 45 Pa•s (Thiokol[R] LP-2), werden mit 3000 g eines Flammrußes (Printex[R] 25) und 100 g Molekularsiebpulver 4A in einem Doppelwellendissolver während 10 min vermischt.

Zu dieser Mischung werden 400 g einer 60 %igen Paste (entsprechend 240 g BaO) von Bariumoxid in Benzylbutylphthalat und 100 g eines handelsüblichen, epoxidendständigen Silans gegeben und erneut 10 min gemischt.

Die erhaltene Grundmischung wird geteilt. Ein Teil wird sofort geprüft. Ein zweiter Teil wird verschlossen 3 Monate bei 40 °C gelagert und danach geprüft. Die gelagerte Grundmischung war nach 3 Monaten noch genauso gut verarbeitbar wie die frisch hergestellte.

Zur Prüfung wurden jeweils 4000 g der Grundmischung mit 250 g einer Paste aus 58 Gew.-% Mangan-(IV)-oxid, 38 Gew.-% Benzylbutylphthalat und 1 Gew.-% eines Beschleunigers (Tetraethylthiuramidsulfid) vermengt.

Die erhaltene Masse ist 90 min lang verarbeitbar und härtet innerhalb von 24 h vollständig aus.

Es werden Probekörper hergestellt, indem jeweils 2 Glasplättchen mittels 15 x 15 x 50 mm der Masse miteinander verbunden werden. Die Probekörper werden 14 d bei Normklima (23 °C/50 % r. F.) gehärtet, danach unterschiedlichen Lagerungen unterworfen und durch Dehnversuche auf Haftung und physikalische Eigenschaften der Masse untersucht.

| Ergebnisse | | |
|---|---|---|
| | Frische Masse | Masse nach Lagerung |
| E-Modul (100 %) | $1,3$ N/mm$^2$ | $1,1$ N/mm$^2$ |
| max. Dehnbarkeit | 140 % | 150 % |
| Zerreißfestigkeit | $1,5$ N/mm$^2$ | $1,3$ N/mm$^2$ |
| Haftung nach | | |
| 300 h UV-Bestrahlung | i. O. | i. O. |
| 300 h UV-Bestrahlung während Wasserlagerung | i. O. | i. O. |

**Patentansprüche**

1. Dichtungs- und Versiegelungsmassen auf der Basis von flüssigen merkaptoendständigen Polymeren und/oder Oligomeren, bestehend aus einer das Polymer und/oder Oligomer enthaltenden Grundmischung und einer Härtermischung auf Basis Mangandioxid, **dadurch gekennzeichnet,** daß die Grundmischung neben gegebenenfalls weiteren Zusatzstoffen bezogen auf den Anteil an Polymer und/oder Oligomer 30 bis 80 Gew.-% Ruß, 1 bis 3 Gew.-% Molekularsiebpulver, 3 bis 8 Gew.-% Bariumoxid und 1 bis 5 Gew.-% eines merkapto- und/oder epoxidendständigen Silans enthält.

2. Dichtungs- und Versiegelungsmassen nach Anspruch 1, **dadurch gekennzeichnet,** daß das merkaptoendständige Polymer ein Polysulfidpolymer mit einem mittleren Molekulargewicht von 2500 bis 4000 und einer mittleren Vernetzung von 0,1 bis 2 % ist.

3. Dichtungs- und Versiegelungsmassen nach den Ansprüchen 1 und 2, **dadurch gekennzeichnet,** daß das Silan eine Mischung aus einem merkapto- und einem epoxidendständigen Silan im Verhältnis 1:2 bis 2:1 ist.

4. Verfahren zur Herstellung der Grundmischung nach Anspruch 1, **dadurch gekennzeichnet,** daß das merkaptoendständige Polymer und/oder Oligomer mit Ruß und wasserfreien Molekularsiebpulver gemischt und dabei getrocknet wird, zu dieser Mischung Bariumoxid und das Silan zugegeben und homogenisiert werden.

## Claims

1. Jointing and sealing compounds based on liquid mercapto-terminal polymers and/or oligomers, consisting of a basic mixture containing the polymer and/or oligomer and a hardener mixture based on manganese dioxide, characterized in that the basic mixture contains, in addition to possible further additives, relative to the proportion of polymer and/or oligomer, from 30 to 80% by weight of soot, from 1 to 3% by weight of molecular-sieve powder, from 3 to 8% by weight of barium oxide and from 1 to 5% by weight of a mercapto- and/or epoxy-terminal silane.

2. Jointing and sealing compounds according to Claim 1, characterized in that the mercapto-terminal polymer is a polysulphide polymer with an average molecular weight of from 2500 to 4000 and an average wetting of from 0·1 to 2%.

3. Jointing and sealing compounds according to Claims 1 and 2, characterized in that the silane is a mixture of a mercapto- and an epoxy-terminal silane in a ratio of from 1 : 2 to 2 : 1.

4. A process for preparing the basic mixture according to Claim 1, characterized in that the mercapto-terminal polymer and/or oligomer is mixed with soot and anhydrous molecular-sieve powder and is dried in the process, and barium oxide and the silane are added to this mixture and homogenized.

## Revendications

1. Matières d'étanchéité et de scellement à base de polymères et/ou d'oligomères liquides comportant des groupes mercapto terminaux, consistant en un mélange de base contenant le polymère et/ou l'oligomère et en un mélange durcisseur à base de dioxyde de manganèse, caractérisées en ce que le mélange de base renferme, éventuellement à côte d'autres additifs, 30 à 80% en poids de noir de carbone, 1 à 3% en poids de tamis moléculaire en poudre, 3 à 8% en poids d'oxyde de baryum et 1 à 5% en poids d'un silane comportant des groupes mercapto et/ou époxy terminaux, par rapport à la partie polymère et/ou oligomère.

2. Matières d'étanchéité et de scellement selon la revendication 1, caractérisées en ce que le polymère comportant des groupes mercapto terminaux est un polymère de polysulfure avec un poids moléculaire moyen de 2500 à 4000 et une réticulation moyenne de 0,1 à 2%.

3. Matières d'étanchéité et de scellement selon les revendications 1 et 2, caractérisées en ce que le silane est un mélange d'un silane comportant des groupes mercapto terminaux et d'un silane comportant des groupes époxy terminaux dans un rapport de 1:2 à 2:1.

4. Procédé de préparation du mélange de base selon la revendication 1, caractérisé en ce que le polymère et/ou l'oligomère comportant des groupes mercapto terminaux est mélangé avec du noir de carbone et des tamis moléculaires en poudre anhydres et est ainsi séché, que l'oxyde de baryum et le silane sont incorporés à ce mélange et homogénéisés.